# EUROPEAN PATENT SPECIFICATION

(11) **EP 1 995 813 B1**
(45) Date of publication and mention of the grant of the patent: **17.11.2010**
(21) Application number: 08009153.1
(22) Date of filing: 16.05.2008
(51) Int. Cl.: H01M 8/04, F16K 1/00

(54) **Fuel cell system**
Brennstoffzellensystem
Système de pile à combustible

(30) Priority: 17.05.2007 JP 2007131367
(43) Date of publication of application: 26.11.2008
(73) Proprietor: HONDA MOTOR CO., LTD., Tokyo 107-8556 (JP)
(72) Inventor: Sugawara, Tatsuya, Wako-shi, Saitama, 351-0193 (JP); Ozaki, Hiroyasu, Wako-shi, Saitama, 351-0193 (JP)
(74) Representative: Herzog, Markus

(56) References cited:
- WO-A-2006/030614
- JP-A- 2001 283 881
- JP-A- 2005 157 676
- JP-A- 2007 032 676
- US-A1- 2007 092 771

## Description

### BACKGROUND OF THE INVENTION

The present invention relates to the fuel cell system equipped with a scavenge system to scavenge the anode of fuel cells.

In the fuel cell system electric power is generated through electro-chemical reaction with hydrogen gas supplied to the anode of the fuel cells and air supplied to the cathode of the fuel cells. As a result of this electro-chemical reaction, water is produced at the cathode and this produced water permeates an electrolyte membrane between the anode and the cathode and comes from the cathode to the anode. Accordingly if the fuel cell system is used in a low temperature environment and is cooled below the freezing point, this produced water freezes while the fuel cell is out of operation. In order to prevent the produced water from freezing, there is an idea that not only the cathode but also the anode is scavenged with air to discharge the produced water outside the fuel cell system. A fuel system has been put forward to scavenge the anode with air. According to this fuel cell system a pipe is installed to connect the anode with the cathode and a scavenge gas introduction valve is installed to keep and stop air flowing in this pipe and is opened to keep air flowing when the anode is scavenged.

However when the anode is scavenged with air in this fuel cell system while the fuel cell system is out of operation, water diffuses from the anode to a plunger in the scavenge gas introduction valve after the scavenging is finished and stays between the plunger and a guide that supports the plunger. If this water freezes while the fuel cell is out of operation, there is a problem that the scavenge gas introduction valve does not work when the fuel cell system is started below the freezes point because the plunger is stuck.

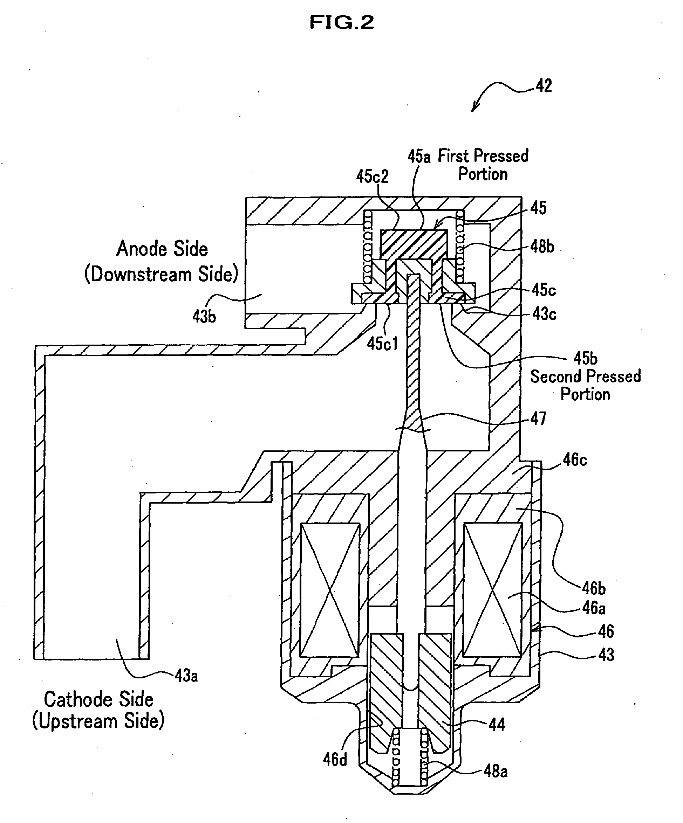

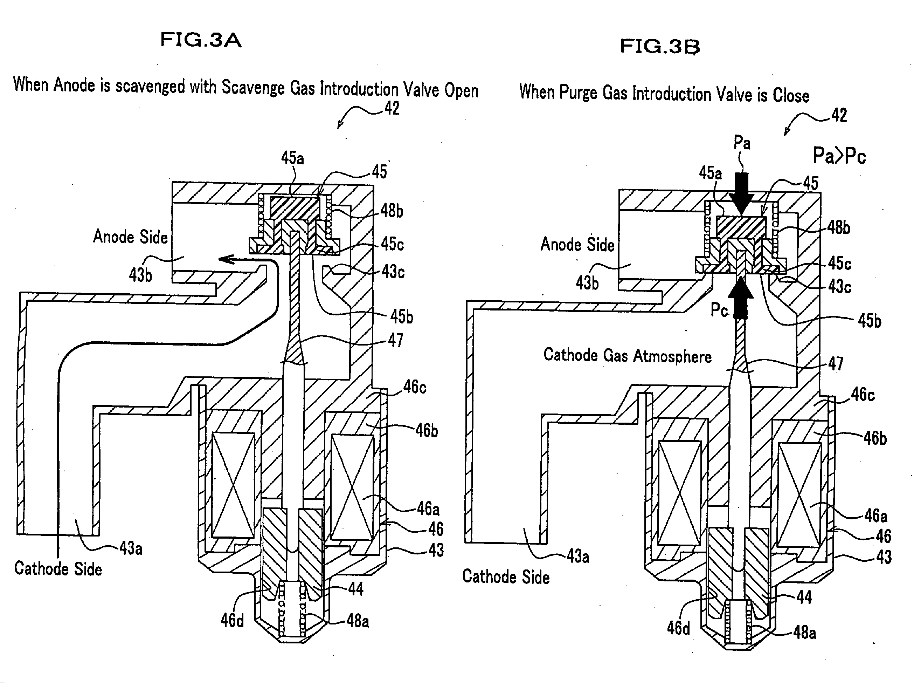

In order to prevent the scavenge gas introduction valve from being stuck, Japanese Laid-Open Paten Application 2005-265036 (especially Fig.2 and Fig.3 are referred to) and Japanese Laid-Open Paten Application 2005-273704 (especially Fig.2 and Fig.3 are referred to) propose a fuel cell system in which the plunger in the scavenge gas introduction valve is kept separated from water diffused from the anode by a diaphragm or something like the diaphragm.

However if a diaphragm is used to keep the scavenge gas introduction valve separated from water as proposed by Japanese Laid-Open Patent Application 2005-265036 and Japanese Laid-Open Patent Application 2005-273704, there is another problem with the scavenge gas introduction valve stopping working due because a suction effect caused by the plunger room being compressed and expanded during operation that is separated with the diaphragm. Therefore in this fuel cell system a breathing hole has to be formed to have the plunger room communicate with the atmosphere. But there is a problem with the scavenge gas introduction valve due to this breathing hole. If this breathing hole is formed, a driving force needed to open the scavenge gas introduction valve becomes large because the whole diaphragm is pressurized by the cathode gas pressure while the anode is being scavenged with the plunger room's pressure equal to the atmosphere pressure.

It is also problematic to have more components in a fuel cell system for the diaphragm and the breathing hole because the number of components increases, which results in a difficulty in packing all of them in a case, as well as cost increase and weight increase.

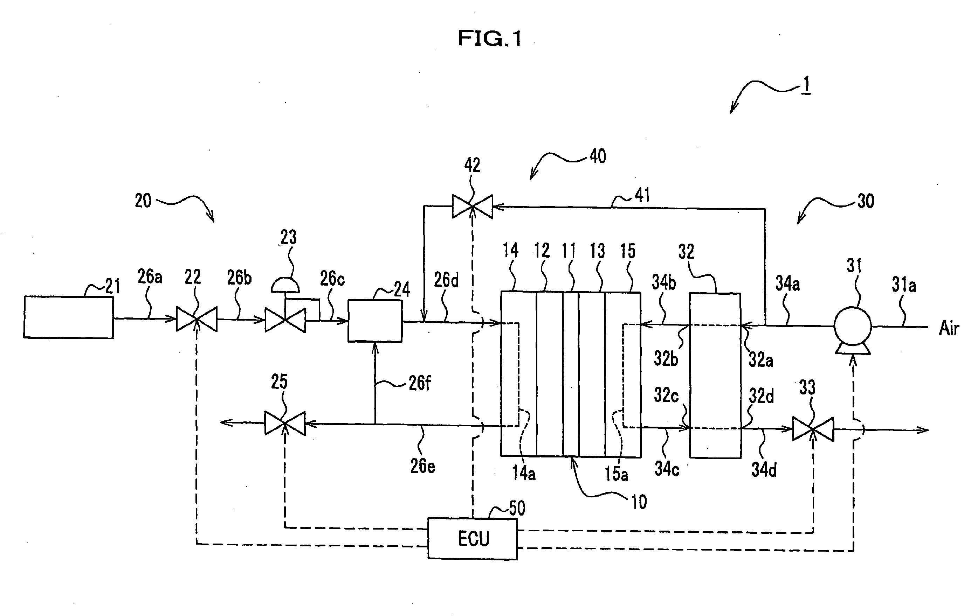

JP 2001-283881 A, on which the preamble of claim 1 is based, shows a combined reformer/fuel cell system. In Fig. 1, the bypass pipe L3, L4 supplies air taken upstream of the humidifier 70 to the reformer 30, which, in turn, supplies anode gas to the fuel cell FC. The bypass pipe includes valves SV3, SV4 with a plunger/valve element 85 contained within the gas supply part 81 of the valve. The valve has no spring. No ejector is shown, and the bypass L3, L4 feeds the reformer, but not the anode gas supplied downstream of any ejector.

In JP 2005-157676 A, a fuel cell system is shown having a valve 1 provided in the cathode gas return line 113 feeding not reacted cathode gas back to the humidifier 111 to be recirculated to the cathode inlet side 112. The bypass pipe 114 leads from the humidifier 11 to the anode outlet side 125 of the anode side system. No ejector is shown, and the valve is provided in the cathode gas return line 113.

In JP 2007-032676 A, Fig. 1 shows a bypass L5 bypassing the fuel cell to connect the anode gas side gas circulation L4 to the cathode (air) outlet L2. The anode gas recirculation system shows an ejector 19. An ejector 19 is shown, but the relevant valve 20 is mounted in a bypass which does not lead into the anode gas supply pipe downstream of the ejector.

It is an object of the invention to provide a fuel cell system which avoids the above mentioned problems.

The object is achieved by a fuel cell system in accordance with claim 1.

### Summary of the Invention

According to the first aspect of the present invention, the produced water remaining at the anode is prevented by the humidifier from diffusing and the cathode gas (air) which is dry and fed through the air inlet comes and fills the cathode side space in the scavenge gas introduction valve when electricity generation is out of operation. As a result the cathode side space in the scavenge gas introduction valve is kept dry.

A second aspect of the present invention provides a fuel cell system of the first aspect, wherein the scavenge gas introduction valve is opened by the plunger moving forward and closed by the shaft moving backward and includes a valve body that comprises a first pressed portion which is pressed by an anode gas pressure so as to keep the scavenge gas introduction valve closed at least when the scavenge gas introduction valve is kept closed and a second pressed portion which is pressed by a cathode gas pressure so as to open the scavenge gas introduction valve.

According to the second aspect of the present invention, a differential pressure between the cathode gas and the anode gas is applied to the valve body while electricity is being generated so as to have the valve body in contact with the valve seat do close the scavenge gas introduction valve, since the anode gas pressure is usually kept higher than the cathode gas pressure. As a result the driving force to open the scavenge gas introduction valve is made smaller and does not have to be so large as for the prior fuel cell system, because a force of a spring that presses the valve body can be reduced.

A third aspect of the present invention provides a fuel cell system of the second aspect, wherein the shaft is installed on a side of the cathode in the bypass pipe with respect to the valve body of the scavenge gas introduction valve.

According to the third aspect of the present invention, the plunger is installed on the cathode side in the scavenge gas introduction valve where the dry cathode gas is introduced. As a result the plunger is kept dry when electricity generation is out of operation and no water comes and freezes between the plunger and its guide.

A fourth aspect of the present invention provides a fuel cell system of the first aspect, further comprising an air-compressor which supplies the cathode gas into the cathode.

According to the fourth aspect of the present invention, the cathode gas is supplied not only to the cathode but also to the anode through the bypass pipe to scavenge the anode. As a result the cathode side space in the scavenge gas introduction valve installed in the bypass pipe is kept dry.

### BRIEF DESCRIPTION OF THE DRAWINGS

The object and features of the present invention will become more readily apparent from the following detailed description taken in conjunction with the accompanying drawings in which:
Fig. 1 indicates schematically a whole configuration of an embodiment of the present invention.;
Fig. 2 is a cross sectional view of a scavenge gas introduction valve used for the present invention and indicates an inner structure of the scavenge gas introduction valve;
Fig. 3A is a cross sectional views of a scavenge gas introduction valve which is open when the anode is being scavenged.
Fig. 3B is a cross sectional views of a scavenge gas introduction valve which is close The same or corresponding elements or parts are designated with like references throughout the drawings.

### DETAILED DESCRIPTION OF THE INVENTION

Taking a look at Fig. 1 to 3A and 3B, the embodiment of the present invention is explained hereinafter. The fuel cell system of the this embodiment is applied to such fixed power sources as used for a fuel cell automobile, a ship, an aircraft and a domestic use.

As indicated in Fig.1, the fuel cell system of this embodiment comprises a fuel cell 10, a cathode system 30, an anode scavenge system 40, and ECU ( Control Device ) 50.

The fuel cell 10 includes a plurality of single cells, each of which is constituted by separators 14, 15 both of which are conductive and a membrane electrode assembly ( referred to as MEA hereinafter ) which is constituted an anode 12, a cathode 13 and a proton conductive solid polymer electrolyte film 11 sandwiched by the anode 12 and the cathode 13. Both the anode 12 and the cathode 13 include a catalyst. The plural single cells are stacked in series in the single cell's thickness direction in the fuel cell 10. In each separator 14 attached to the anode 12 is formed an anode gas flow passage 14a is, through which hydrogen gas flows, and in each separator 15 attached to cathode 13 is formed a cathode gas passage 15a, through which air flows. In Fig. 1 there is indicated only one single cell for convenience of explanation.

The anode system 20 is intended to supply the hydrogen gas to the fuel cell 10 and discharge the hydrogen gas from the fuel cell 10, and comprises a hydrogen tank 21, a shutoff valve 22, a regulator 23, an ejector 24, a discharge valve 25, and pipes 26a to 26f.

The hydrogen tank 21 is constituted by a tank chamber and a cover. The tank chamber ( not shown ), in which highly pure hydrogen gas that is highly pressurized is stored, is made of an aluminum alloy and covered by the cover that is made of a material such as CFRP(Carbon Fiber Reinforced Plastic) or GFRP (Glass Fiber Reinforced Plastic).

The shutoff valve 22 can be, for instance, an electro-magnetic valve that is installed near an outlet of the hydrogen tank 21 and in communication with the hydrogen tank 21 through the pipe 26a.

The regulator 23 is connected with the shutoff valve 22 through the pipe 26b and has a function to reduce the pressure of the highly pressurized hydrogen gas supplied from the hydrogen tank 21.

The ejector 24 is a kind of a vacuum pump to recirculate unreacted hydrogen gas discharged from the anode gas outlet of the anode 12 in the fuel cell 10 and is in communication with the regulator 23 through the pipe 26c. Through the pipe 26d the ejector 24 is in communication with the anode gas inlet of the anode 12 in the fuel cell 10. Through the pipe 26e the anode gas outlet of the anode 12 is in communication with the discharge valve to be explained later. Through the pipe 26f the ejector 24 is in communication with an intermediate portion of the pipe 26e. As a result, hydrogen gas supplied into the anode system 20 is circulated through the pipes 26d, 26e and 26f.

The discharge valve 25 is attached at a portion of the pipe 26e near the outlet of the pipe 26e and functions to become opened to have the produced water discharged from the anode system 20. Here the produced water is water remaining in the anode system 20 including the anode gas passage 14a and the pipes 26d, 26e and 26f and the anode scavenging refers to a process in which an air-compressor 31 is driven to introduce air ( cathode gas ) into the anode system 20 and have the remaining produced water discharged outside.

The cathode system 30 comprises the air-compressor 31, a humidifier 32, a backpressure control valve 33 and pipes 34a to 34d and is intended to supply air ( oxygen gas ) to the cathode 13 in the fuel cell 10 and discharge a cathode-off gas that is discharged out of the outlet of the cathode 13 in the fuel cell 10.

The air-compressor 31 can be an apparatus like a super-charger driven by a motor, and has a function to take in air from the air inlet 31a, compress the air and pump out the compressed air to be supplied to the cathode 13.

The humidifier 32 has a function to collect water contained in the cathode-off gas and humidify the cathode gas ( air ). This humidifier 32 includes, for instance, a hollow fiber membrane filter module that is constituted by a case in which a plurality of bundled hollow membrane fiber filters that are water permeable are accommodated. The pumped compressed air from the air-compressor 31 is supplied to and made to flow in either an inner space inside each membrane filter in the hollow fiber membrane filter module or an outer space outside each membrane filter in the hollow fiber membrane filter module. On the other hand the cathode-off gas which contains a lot of water derived from the produced water is supplied to and made to flow in the space which is either an inner space inside each membrane filter in the hollow fiber membrane filter module or an outer space outside each membrane filter in the hollow fiber membrane filter module and the pumped compressed air is not supplied to and made to flow in. As a result, the cathode gas from the air-compressor 31 is humidified.

The back pressure control valve 33 is constituted by, for instance, a butterfly valve and has a function to keep appropriately the pressure in the cathode system 30.

Through the pipe 34a the air-compressor 31 is in communication with the cathode gas inlet 32a through which the cathode gas supplied from air-compressor 31 is introduced. Through the pipe 34b the cathode gas outlet 32b of the humidifier 32 out of which the humidified cathode-off gas in the humidifier 13 is discharged is in communication with the gas inlet of the cathode 13. Through the pipe 34c the gas outlet of the cathode 13 is in communication with the cathode-off gas inlet 32c of the humidifier 32 through which the cathode-off gas is introduced into the humidifier 32. Through the pipe 34d the cathode-off gas outlet 32d out of which the cathode-off gas in the humidifier 32 is discharged is in communication with the back pressure control valve 33.

The anode scavenge system 40 comprises a bypass pipe 41 and a scavenge gas introduction valve 42.

The bypass pipe 41 is a gas passage through which the cathode gas supplied from the air-compressor 31 is introduced into the anode 12 in the fuel cell 10. One end of the bypass pipe 41 is connected with the pipe 34a which is located on the upstream side from the humidifier 32 while the other end of the bypass pipe 41 is connected with the pipe 26d that is connected with the gas inlet of the anode 12 of the fuel cell 10.

The scavenge gas introduction valve 42 is installed in a portion of the bypass pipe 41 and opened to have the cathode gas coming from the air-compressor 31 introduced through the bypass pipe 41 into the anode 12 when the anode 12 is scavenged.

As is shown in Fig.2 which indicates the cross sectional view of the scavenge gas introduction valve 42 that is closed, the scavenge gas introduction valve 42 is constituted by such components as a plunger 44 and a valve body 45 accommodated in a case 43.

The case 43 is constituted by, for instance, a plurality of cases which are engaged with each other and has a scavenge gas inlet 43a through which the cathode gas as a scavenge gas is introduced and a scavenge gas outlet 43b out of which the cathode gas is discharged. Inside the case 43 there is installed a valve seat 43c. When a valve body 45 ( to be explained later in this description ) comes in contact with the valve seat 43c, the scavenge gas introduction valve 42 is closed. On the other hand when the valve body 45 comes off the valve seat 43c, the scavenge gas introduction valve 42 is opened.

The plunger 44 is installed in the case 43 and held movable in the up-and-down direction in Fig.2 by a drive part 46. When the plunger 44 is moved forward ( which means upward in Fig.2 ), the scavenge gas introduction valve 42 is opened. On the other hand when the plunger 43 is moved backward ( which means downward in Fig.2 ), the scavenge gas introduction valve 42 is closed. The drive part 46 comprises a bobbin 46b on which a coil is wound, a fixed iron core 46c, and a guide member 46d which supports the plunger 44 so that the plunger 44 is held movable in the up-and-down direction in Fig.2. There is a shaft 47 installed in the case 43. One end of a shaft 47 ( which means the lower end in Fig.2 ) is inserted and secured in the plunger 44 while the valve body 45 is fixed on the other end of the shaft 47 ( which means the upper end in Fig.2 ). There is a spring 48a which is installed between the lower end of the plunger 44 and the case 43 and kept pressing the valve body 45 in the valve opening direction ( which means upward in Fig.2 ).

The valve body 45 has a first pressed portion 45a and a second pressed portion 45b. The first pressed portion 45a is a whole portion of the valve body 45 that is in contact with the anode gas and the second pressed portion 45b is a whole portion of the valve body 45 that is in contact with the cathode gas. Both the contact portion 45c1 in the valve body 45 with which the valve seat 43c comes in contact is made of an elastic material 45c and the extremity portion ( upper end portion ) 45c2 is also made of the elastic material 45c. There is another spring 48b which is disposed between the valve body 45 and the case 43 and kept pressing the valve body in the valve closing direction ( which means downward in Fig.2 ). The shape of the valve body 45 indicated in Fig.2 is just an example and can be modified within the scope of the present invention.

As shown in Fig.2, there is a scavenge gas inlet 43a disposed in the middle portion of the case 43 in the up-and down direction. There is a scavenge gas outlet 43b in the case 43 disposed across the valve seat 43c from the scavenge gas inlet 43a. There are a couple of spaces into which the inner space of the case 43 is divided by the valve body 45, one is a cathode side space and the other is an anode side space. As is indicated by Fig.2, the plunger 44 is held in the cathode side space in the case 43.

ECU ( Control Device ) 50 as indicated in Fig. 1 has a CPU ( Central Processing Unit ), a memory and a program and is connected with the shutoff valve 22, the discharge valve 25, the air-compressor 31, the back pressure control valve 33 and the scavenge gas introduction valve 42. ECU 50 functions as a scavenge gas introduction valve control device. The scavenge gas introduction valve control device controls the scavenge gas introduction valve 42 so that scavenge gas introduction valve is opened when the anode scavenging starts and closed when the anode scavenging ends. Furthermore ECU 50 controls the open and close operations of the shutoff valve 22, the discharge valve 25 and the rotation speed of the air-compressor and the valve opening of the back pressure control valve 33.

Then the operation of the fuel cell system 1 is to be explained hereinafter. To begin with, while the fuel cell system 1 is in operation, the anode 12 in the fuel cell 10 is supplied with hydrogen gas with the shutoff valve 22 opened and the cathode 13 in the fuel cell 10 is supplied with air including oxygen gas which is humidified with the humidifier 32 with the air-compressor 31 being driven. Under this condition hydrogen gas is oxidized with the help of a catalyst on the anode 12 in the fuel cell 10 to discharge electrons that flow through a outer load to the cathode 13. On the cathode 13 oxygen gas in air that is supplied is reduced with electrons with the help of a catalyst to combine with hydrogen ions permeating through a solid polymer electrolyte membrane 11 from the anode 12 and produce water. In this way electricity is generated in the fuel cell system 1.

However while electricity generation is under way, the water produced on the cathode 13 can permeate through the solid polymer electrolyte membrane 11 to the anode 12. Therefore when the fuel cell system 1 stops electricity generation, both the scavenge introduction valve 42 and the discharge valve 25 are opened, the air-compressor 31 is driven, according to the directions of ECU 50. As a result the cathode gas fed by the air-compressor 31 is supplied to the anode 12 through the bypass pipe 41. In this operation the scavenge gas introduction valve 42 is opened the following way. As indicated in Fig.3A, as soon as the coil 46a is electrified and excited, the plunger 44 is moved upward in Fig.3A and the valve body 45 is lifted up off the valve seat 43c. Then the cathode gas can flow through the scavenge introduction valve 42 as indicated by an arrow in Fig.3A. As the cathode gas flowing from the air-compressor 31 is supplied to the anode 12, the produced water that permeates from the cathode 13 and remains on the anode 12 is blown off and discharged through the discharge valve 25 out of the fuel cell system 1. When this anode scavenging is finished, the scavenge gas introduction valve 42 and the discharge valve 25 are closed and the air-compressor 31 is stopped according to control directions of ECU 50. However the produced water remaining inside MEA can diffuse out of MEA after the anode scavenging is finished and come up to the scavenge gas introduction valve 42 through the pipes 26d to 26f and the bypass pipe.

In order to have the fuel cell system 1 unaffected by this produced water diffusing out of MEA, the fuel cell system 1 of the present invention has a structure to have the plunger 44 exposed to the atmosphere of air ( cathode gas ) when the scavenge gas introduction valve 42 is kept closed as shown in Fig. 3B. To be specific, the plunger 44 is disposed in the cathode side space on the cathode side from the valve body 45 as shown in Fig.2 and the cathode gas to be used for the anode scavenging is introduced from the pipe 34a disposed upstream from the humidifier 32 which collects water from the cathode-off gas as shown in Fig.1. Because of this structure of the fuel cell system 1 as explained above, the produced water remaining at the cathode 13 is collected by the humidifier 31 and can not diffuse up to the pipe 34a when the fuel cell system 1 is kept stopped. As a result the cathode side space in the scavenge gas introduction valve 42 is filled with the air supplied from the air fed through the air inlet 31a and is kept dry, when the fuel cell system 1 is kept stopped.

Accordingly the plunger 44 is kept exposed to the cathode gas which is dry when the fuel cell system 1 is kept stopped and the produced water on the cathode 13 can not diffuse up to a space between the plunger 44 and the guide member 46d through a space between the fixed iron core 46e and the shaft 47. Hence it is possible to prevent water from coming between the plunger 44 and the guide member 46d and freezing. As a result it is possible to prevent the scavenge gas introduction valve 42 from malfunctioning when the fuel cell system 1 starts below the freezing point.

In the fuel cell system 1 of the present invention, the scavenge gas introduction valve 42 is opened by the valve body 45 being pushed off the valve seat 43c by the plunger 44. Since the gas pressure Pa in the anode 12 ( as indicated in Fig.3B ) is controlled to be higher than the gas pressure Pc in the cathode 13 ( as indicated in Fig.3B ) and the differential pressure, Pa - Pc ( > 0 ) is applied to the valve body 45 to keep the valve body in contact with the valve seat 43c when electricity is being generated in the fuel cell system 1, it is possible to make smaller the spring force of the spring 48b to secure the gas isolation between the cathode side and the anode side by preventing a gas from leaking from between the valve body 45 and the valve seat 43c. As a result the plunger 44 is driven and moved by a smaller driving force when the scavenge gas introduction valve 42 is opened and it is possible to make the scavenge gas introduction valve 42 smaller.

Furthermore in the fuel cell system of the present invention it is possible to prevent the scavenge gas introduction valve 42 from malfunctioning when the fuel cell system 1 starts below the freezing point without a diaphram and a breathing hole. As a result it is possible to improve component lay-out due to the reduced number of used components and reduce the weight and the cost of the fuel cell system.

A fuel cell system is provided, which does not malfunction when started below a freezing point nor require a large force to open a purge gas introduction valve. The purge gas introduction valve 42 that introduces a cathode gas into the anode is installed in the bypass pipe that bypasses a humidifier. A plunger 44 that is supported and kept movable in the purge gas introduction valve is kept exposed to the cathode gas atmosphere when the purge gas introduction valve 42 is kept closed. The valve body 45 in the purge gas introduction valve 42 comprises a first pressed portion 45a to act for closing the purge gas introduction valve 42 and a second pressed portion 45b to act for opening the purge gas introduction valve 42.

## Claims

1. A fuel cell system comprising;
a fuel cell (10) comprising;
a cathode (13) into which a cathode gas is introduced through a cathode gas supply pipe (34a);
an anode (12) into which an anode gas is introduced through an anode gas supply pipe (26d);
a humidifier (32) that humidifies the cathode gas to be introduced into the cathode (13);
a bypass pipe (41) connected with the cathode gas supply pipe (34a) bypassing the humidifier (32);
a scavenge gas introduction valve (42) which is installed in the bypass pipe (41) and enables the cathode gas to be supplied through the bypass pipe (41) when opened; and
a scavenge gas introduction valve control device (50) that controls the scavenge gas introduction valve (42) to be opened and closed,
wherein the scavenge gas introduction valve (42) comprises a case (43) with a plunger (44) installed therein, wherein the plunger (44) is secured to a shaft (47) installed in the case (43) and held movable and exposed to a scavenge gas inlet (43a) of the valve (42) having an atmosphere of the cathode gas, and a valve body (45) is fixed to the shaft (47);
**characterized in that**
the bypass pipe (41) connects the cathode gas supply pipe (34a) to the anode gas supply pipe (26d) downstream of an ejector (24) recirculating unreacted anode gas discharged from the anode gas outlet of the anode (12) into the anode gas supply pipe (26d) for scavenging the anode (12) with the cathode gas supplied through the bypass pipe (41); and
that the shaft. (47) in the scavenge gas inlet (43a) of the scavenge gas introduction valve (42) is exposed to the atmosphere of the cathode gas when electricity generation of the fuel cell (10) is out of operation and the valve (42) is kept closed by a spring (48b) which is disposed between the valve body (45) and the case (43) and presses the valve body (45) in the valve closing direction, wherein one end of the shaft (47) is inserted and secured in the plunger (44) while the valve body (45) is fixed on the other end of the shaft (47).

2. A fuel cell system according to claim 1,
wherein the scavenge gas introduction valve (42) is adapted to be opened by the shaft (47) moving forward and closed by the plunger (44) moving backward, and the valve body (45) comprises a first pressed portion (45a) which is pressed by an anode gas pressure so as to keep the scavenge gas introduction valve (42) closed at least when the scavenge gas introduction valve (42) is kept closed and a second pressed portion (45b) which is pressed by a cathode gas pressure so as to open the scavenge gas introduction valve (42).

3. A fuel cell system according to claim 2,
wherein the shaft (47) is installed on a side of the cathode (13) in the bypass pipe (41) with respect to the valve body (44) of the scavenge gas introduction valve (41).

4. A fuel cell system according to claim 1, further comprising an air-compressor (31) which supplies the cathode gas into the cathode (13).

## Patentansprüche

1. Brennstoffzellensystem umfassend:
eine Brennstoffzelle (10), umfassend:
eine Kathode (13), in die durch ein Kathodengaszuführrohr (34a) ein Kathodengas eingeleitet wird;
eine Anode (12), in die durch ein Anodengaszuführrohr (26d) ein Anodengas eingeleitet wird;
einen Befeuchter (32), der das in die Kathode (13) einzuleitende Kathodengas befeuchtet;
ein Bypassrohr (41), das unter Umgehung des Befeuchters (32) mit dem Kathodengaszuführrohr (34a) verbunden ist;
ein Spülgaseinleitventil (42), das in dem Bypassrohr (41) angebracht ist und die Zufuhr des Kathodengases durch das Bypassrohr (41) ermöglicht, wenn es geöffnet ist; und
eine Spülgaseinleitventilsteuervorrichtung (50), die das Spülgaseinleitventil (42) zum Öffnen und Schließen steuert,
wobei das Spülgaseinleitventil (42) ein Gehäuse (43) mit einem darin angebrachten Kolben (44) aufweist, wobei der Kolben (44) an einem Schaft (47) befestigt ist, der in dem Gehäuse (43) angebracht ist und
beweglich gehalten ist und zu einem Spülgaseinlass (43a) des Ventils (42) frei liegt, der eine Atmosphäre des Kathodengases aufweist, und ein Ventilkörper (45) an dem Schaft (47) befestigt ist;
**dadurch gekennzeichnet, dass**
das Bypassrohr (41) das Kathodengaszuführrohr (34a) mit dem Anodengaszuführrohr (26d) stromab eines Ejektors (24) verbindet, der von dem Anodengasauslass der Anode (12) abgegebenes nicht reagiertes Anodengas in das Anodengaszuführrohr (26d) rückführt, um die Anode (12) mit dem durch das Bypassrohr (41) zugeführte Kathodengas zu spülen; und
dass der Schaft (47) in dem Spülgaseinlass (43a) des Spülgaseinleitventils (42) zur Atmosphäre des Kathodengases frei liegt, wenn die Stromerzeugung der Brennstoffzelle (10) außer Betrieb ist und das Ventil (42) von einer Feder (48b) geschlossen gehalten wird, die zwischen dem Ventilkörper (45) und dem Gehäuse (43) angeordnet ist und den Ventilkörper (45) in der Ventilschließrichtung drückt, wobei ein Ende des Schafts (47) in den Kolben (44) eingesetzt und dort befestigt ist, während der Ventilkörper (45) an dem anderen Ende des Schafts (47) befestigt ist.

2. Brennstoffzellensystem nach Anspruch 1, worin das Spülgaseinleitventil (42) so ausgelegt ist, dass es von dem sich nach vorne bewegenden Schaft (47) geöffnet wird und von dem sich nach hinten bewegenden Kolben (44) geschlossen wird, und der Ventilkörper (45) einen ersten Druckabschnitt (45a) aufweist, der vom Anodengasdruck unter Druck gesetzt wird, um das Spülgaseinlassventil zumindest dann geschlossen zu halten, wenn das Spülgaseinlassventil (42) geschlossen ist, sowie einen zweiten Druckabschnitt (45b), der durch Kathodengasdruck unter Druck gesetzt wird, um das Spülgaseinleitventil (42) zu öffnen.

3. Brennstoffzellensystem nach Anspruch 2, worin der Schaft (47) in Bezug auf den Ventilkörper (44) des Spülgaseinleitventils (41) an einer Seite der Kathode (13) in dem Bypassrohr (41) angebracht ist.

4. Brennstoffzellensystem nach Anspruch 1, das ferner einen Luftkompressor (31) aufweist, der das Kathodengas in die Kathode (13) fördert.

## Revendications

1. Système de pile à combustible comprenant :
une pile à combustible (10) comprenant :
une cathode (13) dans laquelle un gaz de cathode est introduit à travers un tuyau d'alimentation en gaz de cathode (34a) ;
une anode (12) dans laquelle un gaz d'anode est introduit à travers un tuyau d'alimentation en gaz d'anode (26d) ;
un humidificateur (32) qui humidifie le gaz de cathode à introduire dans la cathode (13) ;
un tuyau de contournement (41) raccordé au tuyau d'alimentation en gaz de cathode (34a) contournant l'humidificateur (32) ;
une soupape d'introduction de gaz d'épuration (42) qui est installée dans le tuyau de contournement (41) et permet de fournir le gaz de cathode à travers le tuyau de contournement (41) une fois ouvert ; et
un dispositif de commande de soupape d'introduction de gaz d'épuration (50) qui commande la soupape d'introduction de gaz d'épuration (42) pour qu'elle soit ouverte et fermée,
dans lequel la soupape d'introduction de gaz d'épuration (42) comprend un boîtier (43) dans lequel est installé un plongeur (44), où le plongeur (44) est fixé sur un arbre (47) installé dans le boîtier (43) et maintenu mobile et exposé à une admission de gaz d'épuration (43a) de la soupape (42) ayant une atmosphère du gaz de cathode, et un corps de soupape (45) est fixé sur l'arbre (47) ;
**caractérisé en ce que**
le tuyau de contournement (41) raccorde le tuyau d'alimentation en gaz de cathode (34a) au tuyau d'alimentation en gaz d'anode (26d) en aval d' un éjecteur (24) remettant en circulation le gaz d'anode n'ayant pas réagi évacué de l'orifice de refoulement de gaz d'anode de l'anode (12) dans le tuyau d'alimentation en gaz d'anode (26d) pour épurer l'anode (12) avec le gaz de cathode fourni à travers le tuyau de contournement (41) ; et
l'arbre (47) dans l'admission de gaz d'épuration (43a) de la soupape d'introduction de gaz d'épuration (42) est exposé à l'atmosphère du gaz de cathode lorsque la génération d'électricité de la pile à combustible (10) est hors service et que la soupape (42) est maintenue fermée par un ressort (48b) qui est disposé entre le corps de soupape (45) et le boîtier (43) et presse le corps de soupape (45) dans la direction de fermeture de soupape, où une extrémité de l'arbre (47) est insérée et fixée dans le plongeur (44) tandis que le corps de soupape (45) est fixé sur l'autre extrémité de l'arbre (47).

2. Système de pile à combustible selon la revendication 1,
dans lequel la soupape d'introduction de gaz d'épuration (42) est adaptée pour être ouverte par l'arbre (47) se déplaçant par l'avant et fermée par le plongeur (44) se déplaçant vers l'arrière, et le corps de soupape (45) comprend une première portion pressée (45a) qui est pressée par une pression de gaz d'anode de façon à maintenir la soupape d'introduction de gaz d'épuration (42) fermée au moins lorsque la soupape d'introduction de gaz d'épuration (42) est maintenue fermée et une seconde portion pressée (45b) qui est pressée par une pression de gaz de cathode de façon à ouvrir la soupape d'introduction de gaz d'épuration (42).

3. Système de pile à combustible selon la revendication 2,
dans lequel l'arbre (47) est installé sur un côté de la cathode (13) dans le tuyau de contournement (41) par rapport au corps de soupape (44) de la soupape d'introduction de gaz d'épuration (41).

4. Système de pile à combustible selon la revendication 1, comprenant en outre un compresseur d'air (31) qui fournit le gaz de cathode dans la cathode (13).
